(19) Europäisches Patentamt
European Patent Office
Office européen des brevets

(11) **EP 2 323 953 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(21) Anmeldenummer: **09775945.0**

(22) Anmeldetag: **09.07.2009**

(51) Int Cl.:
*C02F 1/42* *(2006.01)*     *B01J 47/14* *(2006.01)*
*B01J 49/00* *(2006.01)*     *C02F 1/00* *(2006.01)*

(86) Internationale Anmeldenummer:
**PCT/DE2009/000957**

(87) Internationale Veröffentlichungsnummer:
**WO 2010/017792 (18.02.2010 Gazette 2010/07)**

(54) **NACHRÜSTBARE STEUEREINHEIT FÜR EINE ENTHÄRTUNGSVORRICHTUNG**

RETROFITTABLE CONTROL UNIT FOR A SOFTENING APPARATUS

UNITÉ DE COMMANDE ADAPTABLE POUR UN ADOUCISSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.08.2008 DE 102008037229**

(43) Veröffentlichungstag der Anmeldung:
**25.05.2011 Patentblatt 2011/21**

(73) Patentinhaber: **Judo Wasseraufbereitung GmbH**
**71364 Winnenden (DE)**

(72) Erfinder:
• **DOPSLAFF, Carsten**
  **71364 Winnenden (DE)**

• **SÖCKNICK, Ralf**
  **70806 Kornwestheim (DE)**
• **NEIDHARDT, Klaus**
  **71577 Grosserlach (DE)**
• **HAUG, Alexander**
  **71686 Remseck (DE)**
• **MELCHER, Siegfried**
  **71720 Oberstenfeld (DE)**

(74) Vertreter: **Kohler Schmid Möbus**
**Patentanwälte**
**Ruppmannstraße 27**
**70565 Stuttgart (DE)**

(56) Entgegenhaltungen:
WO-A2-2009/071066     JP-A- 2003 019 480
US-A1- 2007 144 953     US-A1- 2007 215 531

EP 2 323 953 B1

**Beschreibung**

Die Erfindung betrifft eine Steuereinheit für eine Enthärtungsvorrichtung, wobei die Steuereinheit umfasst

- einen Haupt-Zulauf für Rohwasser,
- einen Haupt-Ablauf für Verschnittwasser,
- einen Sensor zur Bestimmung der Wasserhärte des Rohwassers $WH_{roh}$ oder des Verschnittwassers $WH_{verschnitt}$,
- einen Unter-Ablauf, welcher aus dem Haupt-Zulauf mit Rohwasser gespeist wird,
- einen Unter-Zulauf, welcher auf den Haupt-Ablauf geführt ist,
- eine Bypassleitung, welche parallel zu Unter-Ablauf und Unter-Zulauf geführt ist,
- eine automatisch verstellbare Verschneideeinrichtung zum Mischen eines Verschnittwasserstroms $V_{verschnitt}(t)$ aus einem ersten Teilstrom $V(t)_{teil1weich}$ des Unter-Zulaufs und einem zweiten Teilstrom $V(t)_{teil2roh}$ der Bypassleitung,
- eine elektronische Steuereinrichtung, wobei die Steuereinrichtung dazu ausgebildet ist, mittels der bestimmten Wasserhärte $WH_{roh}$ oder $WH_{verschnitt}$ die Verstellposition der Verschneideeinrichtung so nachzuregeln, dass die Wasserhärte im Verschnittwasserstrom $V_{verschnitt}(t)$ auf einen vorgegebenen Sollwert eingestellt wird.

Eine Wasserenthärtungsanlage mit einer solchen Steuereinheit ist bekannt geworden durch die EP 0 900 765 B1.

Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist.

Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Bei einfachen Wasserenthärtungsanlagen wird die Enthärtungsvorrichtung seriell vor eine Wasserinstallation geschaltet, so dass die nachfolgende Wasserinstallation vollenthärtetes Wasser zur Verfügung hat.

Aus technischen oder wirtschaftlichen Gründen ist es jedoch oft notwendig oder erwünscht, lediglich teilenthärtetes Wasser einzusetzen. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität der Enthärtungsvorrichtung schnell erschöpft, und es muss frühzeitig regeneriert werden. Dies ist mit einem hohen Salzverbrauch und damit hohen Kosten verbunden.

Zur Bereitstellung von teilenthärtetem Wasser ist es bekannt, einen zulaufenden Rohwasserstrom aufzuspalten, einen ersten Teilstrom einer Vollenthärtung zu unterziehen (Weichwasser-Teilstrom) und einen zweiten Teilstrom unbehandelt zu lassen (Rohwasser-Teilstrom, auch Bypass-Teilstrom). Anschließend werden die beiden Teilströme wiedervereint (so genannte Verschneidung); der vereinigte Wasserstrom wird meist als Verschnittwasser-Strom bezeichnet. Der Verschnittwasserstrom wird dann in die nachfolgende Wasserinstallation geleitet.

Einfache Wasserenthärtungsanlagen mit Verschneidung sehen ein festes oder auch manuell verstellbares Verhältnis von erstem und zweitem Teilstrom vor; dieses Verhältnis ist der lokalen Rohwasserhärte und der gewünschten Verschnittwasserhärte angepasst.

Nachteilig bei solchen einfachen Wasserenthärtungsanlagen mit Verschneidung ist es, dass eine beispielsweise jahreszeitbedingt schwankende Rohwasserhärte zu schwankenden Verschnittwasserhärten führt. Diese Schwankung wird meist hingenommen; falls die schwankende Rohwasserhärte erkannt wird, kann auch eine manuelle Nachjustierung des Verhältnis von erstem und zweitem Teilstrom erfolgen.

In letzter Zeit sind auch Wasserenthärtungsanlagen mit vollautomatischer Verschneidung bekannt geworden, siehe EP 0 900 765 B1. Mittels eines Leitfähigkeitssensors wird die Härte des zufließenden Rohwassers bestimmt, und ein Verhältnis der Teilströme, welches über zwei Durchflussmesser bestimmt wird, wird über ein automatisch verstellbares Ventil abhängig von der Rohwasserhärte nachgeregelt.

Nachteilig bei den bekannten Wasserenthärtungsanlagen mit automatischer Verschneidung sind vor allem die hohen Kosten, die für eine solche Anlage anfallen. Die bekannten Anlagen sind hochkomplexe, integrierte Vorrichtungen, die etwaige zuvor installierte, einfache (nicht-automatische) Wasserenthärtungsanlagen ohne Verschneidung oder auch mit fester oder manuell verstellbarer Verschneidung vollständig ersetzen.

Aus der US 2007/0215531 A1 ist eine dreiteilige Wasserbehandlungsanlage bekannt geworden, umfassend einen Verbindungskopf mit mehreren Steuerscheiben, eine Filterkerze und eine Steuereinheit. Im Verbindungskopf kann ein Rohwasserstrom mittels der Steuerscheiben auf zwei Teilströme aufgeteilt werden, die beide der Filterkerze zugeführt werden; in der Filterkerze wird aber nur einer der Teilströme behandelt. Beide Teilströme zusammen fließen zurück in den Verbindungskopf.

Die JP 2003 019 480 A beschreibt eine integrierte Wasserenthärtungsanlage, bei der an einem ersten T-Stück ein Teilstrom von Wasser ausgeleitet und durch Enthärtungsbehälter geführt wird, und über ein zweites T-Stück in den dem ersten T-Stück zufließenden Wasserstrom eingeleitet wird.

Die US 2007/0144953 A1 beschreibt eine Bypass-Anordnung, mit der ein einströmender Wasserstrom durch ein Bypassventil und ein gekoppeltes Verschneideventil zwischen einem anzuschließenden Behandlungssystem und einem Bypass umgeschaltet werden kann. Die Bypass-Anordnung wird manuell verstellt.

Die WO 2009/071066 A2 beschreibt eine Wasserenthärtungsvorrichtung, bei der in einem Anschlusszwischenstück ein Rohwasserstrom auf eine Enthärtungsvorrichtung und einen Bypass aufgeteilt wird, und die Teilströme anschließend im Anschlusszwischenstück verschnitten werden. Ein Durchflussmesser und ein Leitfähigkeitssensor, die im Anschlusszwischenstück angeordnet sind, werden von einer elektronischen Steuervorrichtung ausgelesen, und die Steuervorrichtung steuert ein Verschneideventil. Für eine Ausführungsform wird vorgeschlagen, die Verschneidevorrichtung im Anschlusszwischenstück anzuordnen.

### Aufgabe der Erfindung

Es ist die Aufgabe der vorliegenden Erfindung, eine Teilenthärtung von Wasser auf Grundlage einer vollautomatischen Verschneidung unter Nutzung bereits vorhandener Enthärtungsvorrichtungen zu ermöglichen und dadurch Aufwand und Kosten für die Einrichtung einer vollautomatischen Verschneidung zu reduzieren.

### Kurze Beschreibung der Erfindung

Diese Aufgabe wird gelöst durch eine Steuereinheit der eingangs genannten Art, die dadurch gekennzeichnet ist, dass die Steuereinheit als eine externe Steuereinheit für die Enthärtungsvorrichtung ausgebildet ist, wobei die Steuereinheit ein Steuereinheits-Gehäuse aufweist, an dessen Außenseite der Haupt-Zulauf, der Haupt-Ablauf, der Unter-Ablauf und der Unter-Zulauf ausgebildet sind, und wobei das Steuereinheits-Gehäuse den Sensor, die Bypassleitung, die Verschneideeinrichtung und die elektronische Steuereinrichtung enthält.

Die erfindungsgemäße Steuereinheit vereinigt im Steuereinheits-Gehäuse alle für eine automatische Verschneidung notwendigen Bauelemente, insbesondere eine eigene Bypassleitung. Die Steuereinheit kann mit dem Haupt-Zulauf an das örtliche Wasserversorgungssystem (etwa eine öffentliche Trinkwasserleitung) angeschlossen werden, und versorgt mit dem Haupt-Ablauf eine nachgeschaltete Wasserinstallation, wie beispielsweise das Trinkwassernetz innerhalb eines Gebäudes. An Unter-Ablauf und Unter-Zulauf wird eine Enthärtungsvorrichtung angeschlossen, welche in der Regel aus dem gesamten ihr zulaufenden Rohwasser ein Weichwasser gewinnt. Die erfindungsgemäße Steuereinheit ermittelt selbst mithilfe ihres Sensors (gegebenenfalls ergänzt durch mindestens zwei Durchflussmesser zur Bestimmung der Teilströme $V(t)_{teil1weich}$ und $V(t)_{teil2roh}$) alle Daten, die zu einer automatischen Nachregelung der Verschneideeinrichtung notwendig sind. Ist der Sensor im Verschnittwasserbereich angeordnet, so kann die Verschnittwasserhärte unmittelbar bestimmt und nachgeregelt werden, und Durchflussmesser werden zur Nachregelung der Verschnittwasserhärte nicht benötigt. Ist der Sensor im Rohwasserbereich angeordnet, was die Härtemessung vereinfacht, so kann die Verschnittwasserhärte über die durch zwei Durchflussmesser bestimmten Teilströme $V(t)_{teil1weich}$ und $V(t)_{teil2roh}$ indirekt ermittelt und nachgeregelt werden. Auch ohne Bestimmung der Teilströme $V(t)_{teil1weich}$ und $V(t)_{teil2roh}$ kann eine grobe Steuerung der Verschneideeinrichtung allein anhand der Rohwasserhärte erfolgen; in diesem Fall werden Durchflussmesser ebenfalls nicht benötigt. Die Steuereinheit kann sich insbesondere selbsttätig auf die momentane Wasserhärte einstellen und Schwankungen in der Rohwasserqualität ausgleichen, so dass die Verschnittwasserhärte am Haupt-Ablauf konstant gehalten wird.

Die Steuereinheit wird über den Unter-Ablauf und den Unter-Zulauf an die Enthärtungsvorrichtung angeschlossen. Die Steuereinheit benötigt keinerlei Daten der Enthärtungsvorrichtung oder anderer externer Sensoren. Daher kann die erfindungsgemäße Steuereinheit mit prinzipiell jedem Typus von Enthärtungseinrichtung zusammenarbeiten. Weiterhin fallen keine Arbeiten für Abstimmungen und Justagen in Hinblick auf die verwendete Enthärtungsvorrichtung an, so dass nach der Installation (d.h. dem Anschluss von Haupt-Zulauf, Haupt-Ablauf, Unter-Zulauf und Unter-Ablauf) das Ensemble von Steuereinheit und Enthärtungsvorrichtung sofort einsatzbereit ist ("plug and play").

Als Enthärtungsvorrichtung können insbesondere bereits vorhandene, einfache Wasserenthärtungsanlagen fungieren, die selbst über keine oder nur über eine als unzureichend empfundene Steuerungsfunktion verfügen; alternativ kann die Steuereinheit auch mit einer neuen Enthärtungsvorrichtung zusammenwirken. Falls die angeschlossene Enthärtungseinrichtung selbst über eine (einfache) Steuerungsfunktion verfügt, wird diese durch die Steuerfunktionen der erfindungsgemäßen Steuereinheit ersetzt; eine etwaige geräteinterne Verschneidung in der angeschlossenen Enthärtungsvorrichtung sollte geschlossen werden (d.h. der geräteinterne Bypass wird geschlossen, so dass die angeschlossene Enthärtungsvorrichtung reines Weichwasser produziert).

Die vorliegende Erfindung stellt somit eine universelle, von einer anzuschließenden Enthärtungsvorrichtung separate und bezüglich dieser externe Steuereinheit für die Enthärtungsvorrichtung zur Verfügung. Die Steuereinheit gewinnt alle Daten für die Regelung ihrer Verschneideeinrichtung selbst, und kann damit auf einfache Weise eine konstante Verschnittwasserqualität bereitstellen. Das Steuereinheits-Gehäuse "endet" insbesondere bei Unter-Zulauf und Unter-Ablauf, und enthält insbesondere nicht die Enthärtervorrichtung, was zur Universalität der erfindungsgemäßen Steuereinheit beiträgt.

Der vorgegebene Sollwert der Verschnittwasserhärte kann erfindungsgemäß ein einzelner Härtezielwert oder auch ein Härtezielwert-Intervall sein, bei dessen Verlassen eine Nachregelung der Verstellposition der Verschneideeinrichtung erfolgt.

Man beachte, dass der Regelungsmechanismus der Verschneideeinrichtung sowohl auf der Rohwasserhärte basieren kann (in diesem Fall ergibt sich die momentane Verschnittwasserhärte über das momentane Verhältnis der momentanen Teilströme $V(t)_{teil1weich}$ und $V(t)_{teil2roh}$; die Teilströme $V(t)_{eil1weich}$ und $V(t)_{teil2roh}$ können experimentell über Durchflussmesser exakt bestimmt werden, oder anhand der Verstellposition der Verschneideeinrichtung geschätzt werden), als auch auf der Verschnittwasserhärte (die dann unmittelbar mit dem Sollwert der Verschnittwasserhärte verglichen wird). Die Bestimmung der Teilströme kann mit Durchflussmessern unmittelbar im jeweiligen Teilstrom erfolgen (direkte Bestimmung), oder aber über Differenzbildung eines bestimmten Gesamtstroms mit (in der Regel) einem bestimmten Teilstrom (indirekte Bestimmung).

Bevorzugte Ausführungsformen der Erfindung

Bei einer besonders bevorzugten Ausführungsform der erfindungsgemäßen Steuereinheit ist der Sensor als ein Leitfähigkeitssensor ausgebildet. Aus der Leitfähigkeit wird mittels mathematischer Berechnung oder Auslesen einer Tabelle die Wasserhärte bestimmt, typischerweise in der elektronischen Steuereinrichtung. Leitfähigkeitssensoren zur Wasserhärtebestimmung sind kostengünstig und zuverlässig. Alternativ kann der Sensor beispielsweise auch als Tritrator oder eine ionenselektive Elektrode ausgebildet sein.

Bevorzugt ist weiterhin eine Ausführungsform, bei der der Sensor im Rohwasserbereich der Steuereinheit angeordnet ist. Der Sensor kann beispielsweise in der Bypassleitung angeordnet sein, oder direkt hinter dem Haupt-Zulauf. Der Sensor dient dann zur unmittelbaren Bestimmung der Rohwasserhärte $WH_{roh}$. Die Rohwasserhärte kann zur Bestimmung eines Soll-Verhältnisses von erstem und zweitem Teilstrom zur Erreichung des Wasserhärte-Sollwerts im Verschnittwasser verwendet werden; dieses Soll-Verhältnis kann mittels der überwachten Teilströme nachgeregelt werden. Die Kenntnis der Rohwasserhärte ist auch nützlich zur Bestimmung einer Restkapazität der Enthärtervorrichtung für eine automatische Regenerationssteuerung. Alternativ kann der Sensor im Verschnittwasser angeordnet sein; eine bestimmte Verschnittwasserhärte kann dann unmittelbar mit dem Sollwert zum Zwecke der Nachregelung der Verstellposition der Verschneideeinrichtung verglichen werden. Falls die Rohwasserhärte benötigt wird, kann diese indirekt über die Verschnittwasserhärte und das zugehörige momentane Teilstromverhältnis rückgerechnet werden (unter der Annahme, dass eine angeschlossene Enthärtungsvorrichtung vollständig enthärtet).

Bevorzugt ist auch eine Ausführungsform, die dadurch gekennzeichnet ist, dass die Steuereinheit weiterhin mindestens zwei Durchflussmesser zur direkten oder indirekten Bestimmung der Teilströme $V(t)_{teil1weich}$ und $V(t)_{teil2roh}$ aufweist,

dass die elektronische Steuereinrichtung dazu ausgebildet ist, die Verstellposition der Verschneideeinrichtung auch anhand der bestimmten Teilströme $V(t)_{teil1weich}$ und $V(t)_{teil2roh}$ nachzuregeln,

und dass das Steuereinheits-Gehäuse auch die mindestens zwei Durchflussmesser enthält. In diesem Fall kann die Verschnittwasserhärte sehr genau anhand einer gemessenen Rohwasserhärte und den bestimmten Teilströmen ermittelt und nachgeregelt werden. Die Härtebestimmung im Rohwasser kann zuverlässig und kostengünstig über einen Leitfähigkeitssensor erfolgen.

Bevorzugt ist auch eine Ausführungsform, die vorsieht, dass ein erster Durchflussmesser zur Bestimmung eines gesamten Rohwasserzuflusses $V(t)_{rohges}$ zwischen Haupt-Zulauf und dem Verzweigungspunkt der Bypassleitung angeordnet ist, und dass ein zweiter Durchflussmesser zur Bestimmung des zweiten Teilstroms $V(t)_{teil2roh}$ in der Bypassleitung angeordnet ist. Dieser Aufbau ist in der Praxis bewährt. Insbesondere können mit dem ersten Durchflussmesser vielfältige, untypische Strömungszustände gut erkannt werden.

Eine bevorzugte Weiterbildung dieser Ausführungsform sieht vor, dass die Steuereinheit einen Messeingang für einen dritten Durchflussmesser aufweist, mittels dessen ein Spülwasserstrom $V(t)_{teil3spül}$ für die elektronische Steuereinrichtung bestimmbar ist, und dass die elektronische Steuereinrichtung dazu ausgebildet ist, den ersten Teilstrom $V(t)_{tei1weich}$ gemäß der Gleichung

$$V(t)_{teil1weich} = V(t)_{rohges} - V(t)_{teil2roh} - V(t)_{teil3spül}$$

zu bestimmen. Die Bestimmung des dritten Teilstroms erhöht die Genauigkeit der Verschnittsteuerung bei indirekter Bestimmung eines Teilstroms. Typischerweise ist der dritte Durchflussmesser außerhalb des Steuereinheits-Gehäuses angeordnet und gibt Signale an den Messeingang, der dann an der Außenseite des Steuereinheits-Gehäuses liegt. Alternativ kann der dritte Durchflussmesser aber auch innerhalb des Steuereinheits-Gehäuses angeordnet sein; in diesem Fall muss ein Teil der Steuereinheit einen Spülwasser-Zulauf und einen Spülwasser-Ablauf besitzen, und der Messeingang kann dann direkt an der elektronischen Steuereinrichtung ausgebildet sein. Man beachte, dass bei mehrkammerigen Enthärtungsvorrichtungen gleichzeitig Verschnittwasser entnommen und die Enthärtungsvorrichtung gespült werden kann.

Bei einer vorteilhaften Ausführungsform ist zusätzlich zum Sensor eine Messeinrichtung im Verschnittwasserbereich zur Bestimmung der Konzentration der Härtebildner Calcium und Magnesium $C_{härteverschnitt}$ im Verschnittwasserstrom $V(t)_{verschnitt}$ angeordnet ist. Die Messeinrichtung erlaubt eine zusätzliche Kontrolle und nötigenfalls Nachregelung der Verschneidung, insbesondere wenn der Sensor im Rohwasserbereich angeordnet ist.

Bei einer Weiterbildung dieser Ausführungsform ist die Messeinrichtung als Titrator für eine titrimetrische Bestimmung der Härtebildner ausgebildet. Alternativ kann die Messeinrichtung einen ionenselektiven Sensor, insbesondere eine ionensensitive Elektrode, umfassen.

Besonders bevorzugt ist eine Ausführungsform, die vorsieht, dass unmittelbar hinter dem Haupt-Zulauf ein automatisch betätigbares Absperrventil angeordnet ist, und dass die elektronische Steuereinrichtung dazu ausgebildet ist, bei Vorliegen einer Leckage das Absperrventil automatisch zu schließen. Die Festestellung einer Leckage (an der Steuereinheit, einer angeschlossenen Enthärtungsvorrichtung, und/oder in der nachfolgenden Wasserinstallation) kann über Feuchtigkeitssensoren und/oder (bevorzugt) über untypische Strömungszustände, erschlossen aus den Messgrößen der Durchflussmesser, erfolgen; untypische Strömungszustände umfassen beispielsweise sehr große absolute Durchflüsse (großes Leck, "Rohrbruch") oder lang andauernde, konstante, kleine Durchflüsse (kleines Leck bei sonst geschlossenen Armaturen, "tropfender Wasserhahn").

*Ausführungsformen betreffend eine Regeneration der Enthärtungsvorrichtung*

Besonders bevorzugt ist auch eine Ausführungsform der erfindungsgemäßen Steuereinheit, die dadurch gekennzeichnet ist, dass die Steuereinheit einen Steueranschluss zum Auslösen einer Regeneration der Enthärtungsvorrichtung aufweist, und dass die elektronische Steuereinrichtung dazu ausgebildet ist, in Abhängigkeit von den seit einer letzten ausgelösten Regeneration erfolgten Weichwasserentnahmen und einer oder mehreren, zughörigen, bestimmten Rohwasserhärten eine Restkapazität der Enthärtungsvorrichtung zu ermitteln und bei deren Erschöpfung automatisch zum Auslösen einer Regeneration einen Steuerpuls auf den Steueranschluss auszugeben. In dieser Ausführungsform kann die Steuereinheit zusätzlich eine Regeneration der Enthärtungsvorrichtung, die typischerweise ein Ionentauscherharz enthält, automatisch ansteuern.

Typischerweise wird von einer immer gleichen Grundkapazität der Enthärtungsvorrichtung nach einer Regeneration ausgegangen, die bei einer zugrunde gelegten Rohwasserhärte in eine bestimmte erzeugbare Weichwassermenge umgerechnet werden kann. Im Rahmen der vorliegenden Erfindung wird die zugrunde zu legende Rohwasserhärte über den Sensor direkt oder indirekt empirisch ermittelt. Im einfachsten Fall wird nach Abschluss einer Regeneration die Rohwasserhärte (etwa zu Beginn der ersten Wasserentnahme) einmalig neu bestimmt und die erzeugbare Weichwassermenge für den laufenden Betriebszyklus (=Zeit zwischen zwei Regenerationen) entsprechend aktualisiert. Die Aktualisierung der Weichwassermenge kann aber zur Vereinfachung unterbleiben, wenn die Änderung in der neu bestimmten Rohwasserhärte gegenüber der letzten zugrunde gelegten Rohwasserhärte unterhalb eines Grenzwerts bleibt. Typische Änderungsgrenzwerte, unterhalb denen die Aktualisierung der Wassermenge unterbleibt, liegen im Bereich 0,5°dH bis 2,0°dH.

Zur Erhöhung der Genauigkeit der Bestimmung der Restkapazität können auch die verschiedenen Weichwasserentnahmen innerhalb eines Betriebszyklus mit den zughörigen, momentanen Rohwasserhärten gewichtet werden. Dabei kann meist ohne merklichen Genauigkeitsverlust eine einzige, zu Beginn einer jeden Weichwasserentnahme bestimmte Rohwasserhärte für eine gesamte restliche Wasserentnahme vereinfachend unterstellt werden. Die bei einer jeden Wasserentnahme jeweils verbrauchte Kapazität verringert die verbleibende Kapazität (Restkapazität) der Enthärtungsvorrichtung im laufenden Betriebszyklus. Alternativ kann aber auch mit aufwändigeren mathematischen Verfahren (etwa Faltungsverfahren) eine kontinuierliche Erfassung des Kapazitätsverbrauchs erfolgen, die auch Änderungen der Rohwasserhärte während einer einzelnen Wasserentnahme berücksichtigt.

Die Rohwasserhärte wird im einfachsten Fall mittels eines Sensors direkt im Rohwasserbereich bestimmt; es kann aber auch die Rohwasserhärte aus der momentanen Verschnittwasserhärte in Verbindung mit den momentanen Teilströmen (insbesondere deren momentanem Verhältnis) bestimmt werden.

Die Grundkapazität der Enthärtungsvorrichtung (nach einer Regeneration) wird typischerweise fest programmiert; falls eine Messeinrichtung oder ein Sensor im Verschnittwasser vorhanden ist kann die Grundkapazität auch (nach Installation einer Enthärtungsvorrichtung typischerweise einmalig) empirisch bestimmt werden; dazu wird eine Regeneration ausgelöst und Rohwasser bekannter Härte durch die Enthärtungsvorrichtung geleitet, bis die Konzentration an Ca- und Mg-Ionen im Verschnittwasser wieder ansteigt.

Bei einer bevorzugten Weiterbildung dieser Ausführungsform ist vorgesehen, dass der Sensor als Leitfähigkeitssensor zur Messung der Leitfähigkeit des Rohwassers $L_{roh}$ ausgebildet ist, und dass die elektronische Steuereinrichtung dazu ausgebildet ist, eine Gesamthärte I des Rohwassers, die zur Steuerung der Auslösung der Regeneration verwendet wird, mittels einer ersten Kalibrierkennlinie (F1) aus der gemessenen Leitfähigkeit $L_{roh}$ abzuleiten, und eine Gesamthärte II des Rohwassers, die zur Steuerung der Verschneideeinrichtung verwendet wird, mittels einer zweiten Kalibrierkennlinie (F2) aus der gemessenen Leitfähigkeit $L_{roh}$ abzuleiten.

Durch die Verwendung der beiden unterschiedlichen Kalibrierkennlinien kann die Genauigkeit der automatischen Verschneidung sowie die Genauigkeit und Sicherheit (Rechtzeitigkeit) der automatischen Regenerationsauslösung verbessert werden. Bevorzugt ist die aus der ersten Kalibrierkennlinie (F1) abgeleitete Gesamthärte I zumindest abschnittsweise größer als die aus der zweiten Kalibrierkennlinie (F2) abgeleitete Gesamthärte II. Typischerweise hat die erste Kalibrierkennlinie (F1) einen Umrechnungsfaktor von 28-35 $\mu$S/cm pro °dH, insbesondere 30-33 $\mu$S/cm pro °dH, und die zweite Kalibrierkennlinie (F2) hat typischerweise einen Umrechnungsfaktor von 35-44 $\mu$S/cm pro °dH, insbesondere 38-41 $\mu$S/cm pro °dH.

*Weitere Ausführungsformen*

Bevorzugt ist weiterhin eine Ausführungsform der erfindungsgemäßen Steuereinheit, bei der die automatisch verstellbare Verschneideeinrichtung als ein mit einem Stellmotor verstellbares Ventil ausgebildet ist. Dies hat sich in der Praxis bewährt.

In den Rahmen der vorliegenden Erfindung fällt auch ein Wasserenthärtungssystem, umfassend eine Enthärtungsvorrichtung mit einem Enthärter-Gehäuse und eine erfindungsgemäße, externe Steuereinheit, wobei die Steuereinheit außerhalb des Enthärter-Gehäuses angeordnet ist, und wobei die Enthärtungsvorrichtung am Unter-Ablauf und Unter-Zulauf der Steuereinheit an der Außenseite des Steuereinheits-Gehäuses angeschlossen ist. Das erfindungsgemäße Wasserenthärtungssystem kann schnell und einfach aus einer erfindungsgemäßen Steuereinheit und einer beliebigen WasserEnthärtungsvorrichtung gebildet werden. Enthärter-Gehäuse und Steuereinheits-Gehäuse sind vollständig separat, d.h. es ist weder die Enthärtungsvorrichtung im Steuereinheits-Gehäuse enthalten, noch ist die Steuereinheit im Enthärter-Gehäuse enthalten. Ein Teil des Enthärter-Gehäuses kann jedoch in einen Rücksprung des Steuereinheits-Gehäuses eingeschoben sein (hineinragen) oder umgekehrt.

Eine bevorzugte Ausführungsform des erfindungsgemäßen Wasserenthärtungssystems, das eine oben beschriebene Steuereinheit mit automatischer Regenerationsauslösung umfasst, ist dadurch gekennzeichnet, dass das Wasserenthärtungssystem ein Vorratsgefäß für Regeneriermittellösung sowie Mittel zur automatischen Durchführung einer Regeneration der Enthärtungsvorrichtung, insbesondere umfassend ein mit einem Stellmotor ansteuerbares Regenerationsventil, aufweist, und dass der Steueranschluss mit den Mitteln zur automatischen Durchführung einer Regeneration verbunden ist. Mit diesem Wasserenthärtungssystem kann auch eine automatische Regeneration der Enthärtungsvorrichtung erfolgen. Das Vorratsgefäß und die Mittel zur automatischen Durchführung der Regeneration der Enthärtungsvorrichtung können innerhalb oder außerhalb des Enthärter-Gehäuses angeordnet sein, und sind in aller Regel außerhalb des Steuereinheits-Gehäuses angeordnet. Alternativ zu einem Stellmotor kann auch beispielsweise ein Flügelradantrieb für ein Regenerationsventil vorgesehen sein.

In den Rahmen der vorliegenden Erfindung fällt schließlich auch die Verwendung eines erfindungsgemäßen Wasserenthärtungssystems, wobei die Enthärtungsvorrichtung eine eigene Verschneideeinrichtung aufweist, und wobei die eigene Verschneideeinrichtung der Enthärtungsvorrichtung geschlossen ist, so dass die Enthärtungsvorrichtung nur vollenthärtetes Wasser bereitstellt. Im Rahmen dieser Verwendung übernimmt die erfindungsgemäßen Steuereinheit die volle Kontrolle über die Verschneidung; die eigene (geräteinterne) Verschneideeinrichtung der Enthärtungsvorrichtung wird überbrückt. Die eigene Verschneideeinrichtung ist typischerweise gar nicht, nur manuell oder nur mit geringerer Genauigkeit verstellbar als die Verschneideeinrichtung der erfindungsgemäßen Steuereinheit.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    eine schematische Darstellung eines erfindungsgemäßen Wasserenthärtungssystems mit einer erfindungsgemäßen Steuereinheit, mit einem Leitfähigkeitssensor im Rohwasserbereich;

Fig. 2    eine schematische Darstellung eines erfindungsgemäßen Wasserenthärtungssystems mit einer erfindungsgemäßen Steuereinheit, mit einer ionenselektiven Elektrode im Verschnittwasserbereich.

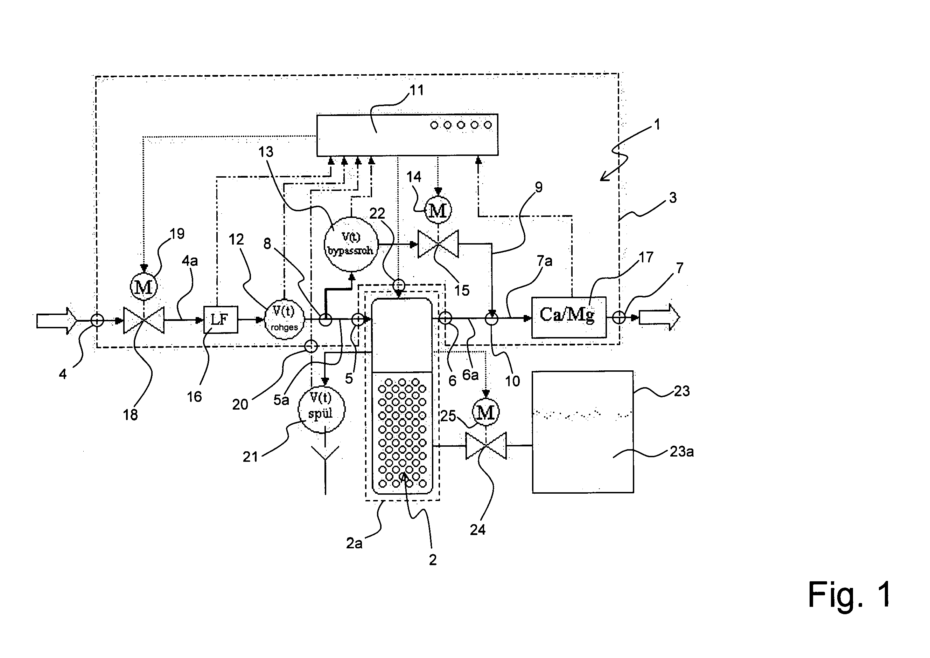

Die **Fig. 1** zeigt in schematischer Darstellung eine erfindungsgemäße Steuereinheit 1, welche an eine Enthärtungsvorrichtung 2 angeschlossen ist. Die Gesamtheit von Steuereinheit 1 und Enthärtungsvorrichtung 2 bilden im Wesentlichen ein erfindungsgemäßes Wasserenthärtungssystem. Man beachte, dass die Enthärtungsvorrichtung 2 relativ zur Steuereinheit 1 stark verkleinert dargestellt ist.

Die Steuereinheit 1 weist ein eigenes Steuereinheits-Gehäuse 3 auf, an oder in welchem alle wesentlichen Komponenten der Steuereinheit 1 angeordnet sind. In der Außenwand des Steuereinheits-Gehäuses 3 sind ein Haupt-Zulauf 4, ein Unter-Ablauf 5, ein Unter-Zulauf 6, und ein Haupt-Ablauf 7 ausgebildet. Diese Anschlüsse sind von außen zugänglich und mit standardisierten Flanschen oder dergleichen versehen.

An Unter-Zulauf 5 und Unter-Ablauf 6 ist die Enthärtungsvorrichtung 2 angeschlossen; sie weist im gezeigten Ausführungsbeispiel ein Ionentauscherharz auf und verfügt über ein separates Enthärter-Gehäuse 2a. Das Enthärtergehäuse 2a ragt teilweise in einen Rücksprung des Steuereinheits-Gehäuses 3; jedoch ist die Enthärtungsvorrichtung 2 vollständig außerhalb des von der Außenwand des Steuereinheits-Gehäuses 3 umschlossenen Raumes angeordnet. Die Enthärtungsvorrichtung 2 enthärtet mit dem Ionentauscherharz vollständig ihr durch den Unter-Ablauf 5 zufließendes Rohwasser und führt dieses als Weichwasser dem Unter-Zulauf 6 zu. Eine in die Enthärtungsvorrichtung 2 integrierte, nur manuell verstellbare, eigene Verschneideeinrichtung (nicht näher dargestellt) ist stillgelegt, indem deren Bypassleitung vollständig geschlossen ist, so dass Wasserfluss durch die Enthärtungsvorrichtung 2 (mit Ausnahme des Regenrationsprozesses) nur noch voll enthärtend durch das Ionentauscherharz erfolgen kann.

Der Haupt-Zulauf 4 ist mit einer örtlichen Wasserversorgungseinrichtung (hier dem Trinkwassernetz) verbunden. Durch den Haupt-Zulauf 4 fließt ein Gesamt-Rohwasserstrom $V(t)_{rohges}$ der Steuereinheit 1 zu. An den Haupt-Zulauf 4 schließt sich ein Leitungsabschnitt 4a an, welcher zu einem Verzweigungspunkt 8 führt. Dort spaltet sich der der Rohwasserstrom $V(t)_{rohges}$ auf in einen ersten Teilstrom, welcher über einen Leitungsabschnitt 5a dem Unter-Ablauf 5 zufließt, und einen zweiten Teilstrom, welcher durch eine Bypassleitung 9 fließt und daher auch als $V(t)_{bypassroh}$ oder $V(t)_{teil2roh}$ bezeichnet wird. Die Bypassleitung 9 führt vom Verzweigungspunkt 8 bis zu einem Vereinigungspunkt 10. Ein weiterer Leitungsabschnitt 6a führt vom Unter-Zulauf 6 ebenfalls zum Vereinigungspunkt 10. Am Vereinigungspunkt 10 werden der erste, nunmehr durch die Enthärtungsvorrichtung 2 enthärtete Teilstrom $V(t)_{teil1weich}$ und der zweite, rohwasserführende Teilstrom $V(t)_{teil2roh}$ aus der Bypassleitung 9 zu einem Verschnittwasserstrom $V(t)_{verschnitt}$ vereint. Schließlich führt ein Leitungsabschnitt 7a vom Vereinigungspunkt 10 zum Haupt-Ablauf 7. Am Haupt-Ablauf 7 ist eine (nicht näher dargestellte) nachfolgende Wasserinstallation angeschlossen.

Man beachte, dass somit die Leitungsabschnitte 4a und 5a sowie die Bypassleitung 9 Rohwasser führen (Rohwasserbereich), weiterhin der Leitungsabschnitt 6a Weichwasser führt (Weichwasserbereich), und der Leitungsabschnitt 7a Verschnittwasser führt (Verschnittwasserbereich).

In der gezeigten Ausführungsform weist die Steuereinheit 1 einen Sensor, nämlich einen Leitfähigkeitssensor 16, im rohwasserführenden Leitungsabschnitt 4a auf, welcher Messsignale an eine elektronische Steuereinrichtung 11 gibt. In der Steuereinrichtung 11 werden die Messsignale in eine Rohwasserhärte $WH_{roh}$ umgerechnet. Anhand eines in der Steuereinrichtung 11 programmierten Sollwerts für eine Wasserhärte im Verschnittwasserstrom $V(t)_{verschnitt}$ wird daraus ein Sollverhältnis der beiden Teilströme $V(t)_{teil1weich}$ und $V(t)_{teil2roh}$ ermittelt, mit welchem sich eine dem Sollwert entsprechende Wasserhärte im Verschnittwasser ergibt. Beträgt beispielsweise der Sollwert 8°dH (dH = Deutsche Härte), und die Rohwasserhärte beträgt 16°dH, so ergibt sich das Sollverhältnis von erstem Teilstrom (dessen Wasserhärte zu 0°dH angenommen wird) und zweitem Teilstrom (dessen Wasserhärte der Rohwasserhärte entspricht) zu 1:1.

Im Leitungsabschnitt 4a ist weiterhin ein erster Durchflussmesser 12 angeordnet, mit dem der gesamte, der Steuereinheit 1 momentan zufließende Rohwasserstrom $V(t)_{rohges}$ bestimmt wird. In der Bypassleitung 9 ist weiterhin ein zweiter Durchflussmesser 13 vorgesehen, welcher den momentanen, zweiten Teilstrom $V(t)_{teil2roh}$ bestimmt. Beide Durchflussmesser geben ihre Messergebnisse an die elektronische Steuereinrichtung 11 weiter. Aus den momentanen Durchflusswerten an den Durchflussmessern 12 und 13 ermittelt die Steuereinrichtung 11 indirekt den momentanen ersten Teilstrom $V(t)_{teil1weich}$, welcher sich (ohne Spülstrom, siehe unten) aus $V(t)_{teil1weich} = V(t)_{rohges} - V(t)_{teil2roh}$ ergibt.

Mittels dem indirekt bestimmten ersten und dem direkt bestimmten zweiten Teilstrom kann die Steuereinrichtung 11 nun überprüfen, ob momentan das Soll-Verhältnis der Teilströme eingehalten wird. Falls nicht, so kann sie mittels eines Stellmotors 14 eine Änderung der Verstellposition eines Ventils 15 in der Bypassleitung 9 und damit eine Änderung des zweiten Teilstroms $V(t)_{teil2roh}$ ansteuern. Dadurch wird auch das Verhältnis des zweiten Teilstroms $V(t)_{teil2roh}$ zum ersten Teilstrom $V(t)_{teil1weich}$ im Verschnittwasserstrom $V(t)_{verschnitt}$ verändert. Mit üblichen Verfahren, etwa PD- oder PID-Regelungen, kann die Verstellposition des Ventils 15 rasch auf den richtigen Wert eingestellt werden, welcher das Soll-Verhältnis der Teilströme und somit die gewünschte Verschnittwasserhärte ergibt.

Die momentane Rohwasserhärte $WH_{roh}$ wird in der erfindungsgemäßen Steuereinheit 11 laufend bestimmt und entsprechend das momentane Soll-Verhältnis der Teilströme angepasst. Die Verstellposition des Ventils 15 wird ebenso laufend nachgeregelt, so dass das tatsächliche Verhältnis der momentanen Teilströme dem momentanen Soll-Verhältnis entspricht und im Verschnittwasserstrom die vorgegebene Soll-Wasserhärte stets eingehalten wird.

In der gezeigten Ausführungsform ist weiterhin im Verschnittwasser führenden Leitungsabschnitt 7a eine Messeinrichtung 17 vorgesehen, mit der direkt die Konzentration der Härtebildner Calcium und Magnesium bestimmt werden kann. Die Messeinrichtung ist hier für eine zusätzliche Kontrolle der Verschnittwasserhärte vorgesehen und gibt ihre Messergebnisse entsprechend an die elektronische Steuereinrichtung 11 weiter, die gegebenenfalls auf Grundlage dieser Messergebnisse die automatisch verstellbare Verschneideeinrichtung in Gestalt des mit dem Stellmotor 14 verstellbaren Ventils 15 nachregelt.

Weiterhin ist unmittelbar hinter dem Haupt-Zulauf 4 in Leitungsabschnitt 4a ein Absperrventil 18 vorgesehen, welches mittels eines Stellmotors 19 automatisch von der Steuereinrichtung 11 betätigt werden kann. Die Steuereinrichtung 11 schließt das Absperrventil, wenn sie eine Leckage bestimmt oder mitgeteilt bekommen hat. Die Steuereinrichtung 11 spürt dazu im gezeigten Ausführungsbeispiel insbesondere ungewöhnliche Strömungszustände am Durchflussmesser 12 auf, etwa sehr große Durchflüsse oder aber kleine, aber unveränderliche Durchflüsse, die jeweils auf Leckagen hinweisen.

In der vorliegenden Ausführungsform verfügt das erfindungsgemäße Wasserenthärtungssystem auch über ein Vorratsgefäß 23 mit einer Regeneriermittellösung 23a, mit der das Ionentauscherharz der Enthärtungsvorrichtung 2 regeneriert werden kann, und Mittel zur automatischen Durchführung einer Regeneration. Vorliegend weist die Enthärtungsvorrichtung 2 eine fallweise auslösbare Regenerationsfunktion auf, im Zuge derer insbesondere ein Regenerationsventil 24 zum Vorratsgefäß 23 mit einem Stellmotor 25 geöffnet und geschlossen wird.

An der Steuereinheit 1 ist ein Steuerausgang 22 an der Außenwand des Steuereinheits-Gehäuses 3 eingerichtet, auf den die Steuereinrichtung 11 ein Signal (Steuerpuls) zur Auslösung einer Regeneration senden kann. Dieser Steuerausgang 22 ist nun erfindungsgemäß mit der (händischen) Auslösung der Regeneration an der Enthärtungsvorrichtung 2 verbunden. Die Steuereinrichtung 11, welche den Kapazitätsverbrauch der Enthärtungsvorrichtung 2 durch die Messergebnisse der Durchflussmesser 12, 13 und des Leitfähigkeitssensors 16 kennt, kann dann bei programmierter Kapazität der Enthärtungsvorrichtung 2 eine Regeration rechtzeitig vor Erschöpfung des Ionentauscherharzes anstoßen. Nötigenfalls kann die Steuereinrichtung 11 erfindungsgemäß die Kapazität der Enthärtungsvorrichtung 2 selbst empirisch bestimmen, indem sie eine Regeneration auslöst (was die volle Kapazität der Enthärtungsvorrichtung 2 herstellt) und die verbrauchte Kapazität bis zu Auftreten eines wieder ansteigenden Gehalts an Härtebildnern im Verschnittwasser (Härtedurchbruch, bestimmt über die Messeinrichtung 17) feststellt.

Die Steuereinheit 1 weist weiterhin einen Messeingang 20 in der Außenwand 3 des Steuereinheits-Gehäuses 3 für einen dritten Durchflussmesser 21 auf. Der dritte Durchflussmesser 21 ist außerhalb der Steuereinheit 1 angeordnet und bestimmt einen bei einer Regeneration der Enthärtervorrichtung 2 anfallenden Spülwasserfluss $V(t)_{teil3spül}$, auch kurz bezeichnet als $V(t)_{spül}$, welcher ursprünglich aus dem über den Unter-Ablauf 5 der Enthärtungsvorrichtung 2 zufließenden Rohwasser abgezweigt wird. Bei der indirekten Bestimmung des ersten Teilstroms $V(t)_{teil1weich}$ in der Steuereinrichtung 11 wird dieser dann mitberücksichtigt gemäß $V(t)_{teil1weich} = V(t)_{rohges} - V(t)_{teil2roh} - V(t)_{teil3spül}$.

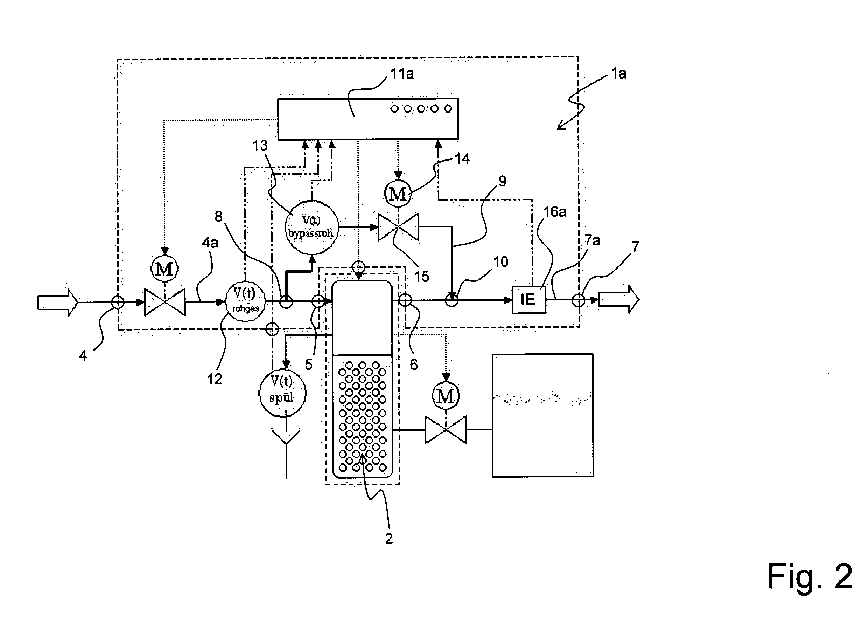

**Fig. 2** zeigt eine ähnliche Ausführungsform eines erfindungsgemäßen Wasserenthärtungssystems wie Fig. 1; im folgenden werden nur die wesentlichen Unterschiede zur Ausführungsform von Fig. 1 erläutert.

Die Steuereinheit 1a des in Fig. 2 gezeigten Wasserenthärtungssystems weist im Leitungsabschnitt 4a (zwischen Haupt-Zulauf 4 und Verzweigungspunkt 8) keinen Leitfähigkeitssensor auf; stattdessen ist eine ionenselektive Elektrode 16a im Leitungsabschnitt 7a im Verschnittwasserbereich (zwischen Vereinigungspunkt 10 und Haupt-Ablauf 7) angeordnet. Die in der Ausführungsform von Fig. 1 vorgesehene zusätzliche Messeinrichtung 20 ist in der Ausführungsform von Fig. 2 nicht vorgesehen.

Die elektronische Steuereinrichtung 11a von Fig. 2 bestimmt den ersten Teilstrom $V(t)_{teil1weich}$, welcher aus der Enthärtungsvorrichtung 2 über den Unter-Zulauf 6 der Steuereinheit 1a zufließt, indirekt über den Gesamt-Rohwasserstrom $V(t)_{rohges}$, der mit dem ersten Durchflussmesser 12 bestimmt wird, und dem zweiten, rohwasserführenden Teilstrom $V(t)_{tei2roh}$ in der Bypassleitung 9, der mit dem zweiten Durchflussmesser 13 bestimmt wird. Die über die ionenselektive Elektrode 16a bestimmte Verschnittwasserhärte wird unmittelbar mit dem in der Steuereinrichtung 11 a hinterlegten Sollwert für die Verschnittwasserhärte verglichen und die automatisch verstellbare Verschneideeinrichtung, hier in Gestalt des mit dem Stellmotor 14 verstellbaren Ventils 15, entsprechend nachgeregelt. Bei dieser Ausführungsform sind die Durchflussmesser 12, 13 für die Nachregelung der Verstellposition der Verschneideeinrichtung nicht notwendig (die Durchflussmesser 12, 13 können daher in einer alternativen Ausführungsform auch weggelassen werden). Falls die gewünschte Verschnittwasserhärte nur durch einen stark ansteigenden Anteil des enthärteten Teilstroms $V(t)_{teil1weich}$ (ermittelt über die Durchflussmesser 12, 13) gehalten werden kann, so ist dies ein Zeichen für eine baldige vollständige Erschöpfung der Enthärtungsvorrichtung 2, und die Steuereinrichtung 11 a löst dann eine Regeneration aus.

Man beachte, dass bei unmittelbarer Bestimmung der Wasserhärte im Verschnittwasser eine geräteinterne, eigene Verschneideeinrichtung in der Enthärtungsvorrichtung 2 nicht unbedingt stillgelegt zu sein braucht, sondern auch beispielsweise ein festes, geräteinternes Verschnittverhältnis vorsehen kann. In diesem Fall muss die Enthärtungsvorrichtung 2 Wasser mit einer geringeren Härte zur Verfügung stellen als im Verschnittwasser der Steuereinheit 1 a gewünscht.

Die erfindungsgemäße Steuereinheit 1, 1a ist unabhängig von der Enthärtungsvorrichtung 2 ausgebildet, und kann somit insbesondere bei einer vorhandenen Enthärtungsvorrichtung 2, die bisher seriell in eine Wasserleitung geschaltet ist, leicht nachgerüstet werden. Dazu wird die Steuereinheit 1, 1 a zwischen die Enthärtungsvorrichtung 2 und die Wasserleitung geschaltet (eingebaut). Die Steuereinheit 1, 1 a leistet alle Funktionen für eine automatische Verschneidung selbst, insbesondere Wasserhärtebestimmung, Durchflussmessungen und Einstellung einer Verschneideeinrichtung, und bevorzugt auch die automatische Auslösung einer Regeneration. Die Steuereinheit kann daher universell eingesetzt werden.

**Patentansprüche**

1.   Steuereinheit (1, 1a) für eine Enthärtungsvorrichtung (2),
     wobei die Steuereinheit (1, 1a) umfasst

       - einen Haupt-Zulauf (4) für Rohwasser,
       - einen Haupt-Ablauf (7) für Verschnittwasser,
       - einen Sensor zur Bestimmung der Wasserhärte des Rohwassers $WH_{roh}$ oder des Verschnittwassers $WH_{verschnitt}$,
       - einen Unter-Ablauf (5), welcher aus dem Haupt-Zulauf (4) mit Rohwasser gespeist wird,
       - einen Unter-Zulauf (6), welcher auf den Haupt-Ablauf (7) geführt ist,
       - eine Bypassleitung (9), welche parallel zu Unter-Ablauf (5) und Unter-Zulauf (6) geführt ist,
       - eine automatisch verstellbare Verschneideeinrichtung zum Mischen eines Verschnittwasserstroms $V_{verschnitt}(t)$ aus einem ersten Teilstrom $V(t)_{teil1weich}$ des Unter-Zulaufs (6) und einem zweiten Teilstrom $V(t)_{teil2roh}$ der Bypassleitung (9),
       - eine elektronische Steuereinrichtung (11, 11a), wobei die Steuereinrichtung (11, 11a) dazu ausgebildet ist, mittels der bestimmten Wasserhärte $WH_{roh}$ oder $WH_{verschnitt}$ die Verstellposition der Verschneideeinrichtung so nachzuregeln, dass die Wasserhärte im Verschnittwasserstrom $V_{verschnitt}(t)$ auf einen vorgegebenen Sollwert eingestellt wird,

     **dadurch gekennzeichnet,**
     **dass** die Steuereinheit (1, 1a) als eine externe Steuereinheit (1, 1a) für die Enthärtungsvorrichtung (2) ausgebildet ist, wobei die Steuereinheit (1, 1a) ein Steuereinheits-Gehäuse (3) aufweist, an dessen Außenseite der Haupt-Zulauf (4), der Haupt-Ablauf (7), der Unter-Ablauf (5) und der Unter-Zulauf (6) ausgebildet sind, und wobei das Steuereinheits-Gehäuse (3) den Sensor, die Bypassleitung (9), die Verschneideeinrichtung und die elektronische Steuereinrichtung (11, 11 a) enthält.

2.   Steuereinheit (1, 1 a) nach Anspruch 1, **dadurch gekennzeichnet, dass** der Sensor als ein Leitfähigkeitssensor (16) ausgebildet ist.

3.   Steuereinheit (1, 1 a) nach Anspruch 1 oder 2, **dadurch gekennzeichnet, dass** der Sensor im Rohwasserbereich der Steuereinheit (1, 1a) angeordnet ist.

4.   Steuereinheit (1, 1 a) nach einem der vorhergehenden Ansprüche,
     **dadurch gekennzeichnet,**
     **dass** die Steuereinheit (1, 1 a) weiterhin mindestens zwei Durchflussmesser (12, 13) zur direkten oder indirekten Bestimmung der Teilströme $V(t)_{teil1weich}$ und $V(t)_{teil2roh}$ aufweist,
     **dass** die elektronische Steuereinrichtung (11, 11a) dazu ausgebildet ist, die Verstellposition der Verschneideeinrichtung auch anhand der bestimmten Teilströme $V(t)_{teil1weich}$ und $V(t)_{teil2roh}$ nachzuregeln,
     und **dass** das Steuereinheits-Gehäuse (3) auch die mindestens zwei Durchflussmesser (12, 13) enthält.

5.   Steuereinheit (1, 1 a) nach einem der vorhergehenden Ansprüche,
     **dadurch gekennzeichnet, dass** ein erster Durchflussmesser (12) zur Bestimmung eines gesamten Rohwasserzuflusses $V(t)_{rohges}$ zwischen Haupt-Zulauf (4) und dem Verzweigungspunkt (8) der Bypassleitung (9) angeordnet ist, und dass ein zweiter Durchflussmesser (13) zur Bestimmung des zweiten Teilstroms $V(t)_{teil2roh}$ in der Bypassleitung (9) angeordnet ist.

6.   Steuereinheit (1, 1a) nach Anspruch 5, **dadurch gekennzeichnet, dass** die Steuereinheit (1, 1a) einen Messeingang (20) für einen dritten Durchflussmesser (21) aufweist, mittels dessen ein Spülwasserstrom $V(t)_{teil3spül}$ für die elektronische Steuereinrichtung (11, 11a) bestimmbar ist,
und dass die elektronische Steuereinrichtung (11, 11a) dazu ausgebildet ist, den ersten Teilstrom $V(t)_{teil1weich}$ gemäß der Gleichung

$$V(t)_{teil1weich} = V(t)_{rohges} - V(t)_{teil2roh} - V(t)_{teil3spül}$$

zu bestimmen.

7. Steuereinheit (1, 1a) nach einem der vorhergehenden Ansprüche,
**dadurch gekennzeichnet, dass** zusätzlich zum Sensor eine Messeinrichtung (17) im Verschnittwasserbereich zur Bestimmung der Konzentration der Härtebildner Calcium und Magnesium $C_{härteverschnitt}$ im Verschnittwasserstrom $V(t)_{verschnitt}$ angeordnet ist.

8. Steuereinheit (1, 1a) nach Anspruch 7, **dadurch gekennzeichnet, dass** die Messeinrichtung (17) als Titrator für eine titrimetrische Bestimmung der Härtebildner ausgebildet ist, oder dass die Messeinrichtung (17) einen ionenselektiven Sensor, insbesondere eine ionensensitive Elektrode, umfasst.

9. Steuereinheit (1, 1a) nach einem der vorhergehenden Ansprüche,
**dadurch gekennzeichnet, dass** unmittelbar hinter dem Haupt-Zulauf (4) ein automatisch betätigbares Absperrventil (18) angeordnet ist,
und dass die elektronische Steuereinrichtung (11, 11 a) dazu ausgebildet ist, bei Vorliegen einer Leckage das Absperrventil (18) automatisch zu schließen.

10. Steuereinheit (1, 1a) nach einem der vorhergehenden Ansprüche,
**dadurch gekennzeichnet,**
**dass** die Steuereinheit (1, 1a) einen Steueranschluss (22) zum Auslösen einer Regeneration der Enthärtungsvorrichtung (2) aufweist,
und **dass** die elektronische Steuereinrichtung (11, 11a) dazu ausgebildet ist, in Abhängigkeit von den seit einer letzten ausgelösten Regeneration erfolgten Weichwasserentnahmen und einer oder mehreren, zughörigen, bestimmten Rohwasserhärten eine Restkapazität der Enthärtungsvorrichtung (2) zu ermitteln und bei deren Erschöpfung automatisch zum Auslösen einer Regeneration einen Steuerpuls auf den Steueranschluss (22) auszugeben.

11. Steuereinheit (1, 1a) nach Anspruch 10, **dadurch gekennzeichnet, dass** der Sensor als Leitfähigkeitssensor (16) zur Messung der Leitfähigkeit des Rohwassers $L_{roh}$ ausgebildet ist, und dass die elektronische Steuereinrichtung (11, 11a) dazu ausgebildet ist, eine Gesamthärte I des Rohwassers, die zur Steuerung der Auslösung der Regeneration verwendet wird, mittels einer ersten Kalibrierkennlinie (F1) aus der gemessenen Leitfähigkeit $L_{roh}$ abzuleiten, und eine Gesamthärte II des Rohwassers, die zur Steuerung der Verschneideeinrichtung verwendet wird, mittels einer zweiten Kalibrierkennlinie (F2) aus der gemessenen Leitfähigkeit $L_{roh}$ abzuleiten.

12. Wasserenthärtungssystem, umfassend eine Enthärtungsvorrichtung (2) mit einem Enthärter-Gehäuse (2a) und eine externe Steuereinheit (1, 1a) nach einem der vorhergehenden Ansprüche,
wobei die Steuereinheit (1, 1a) außerhalb des Enthärter-Gehäuses (2a) angeordnet ist,
und wobei die Enthärtungsvorrichtung (2) am Unter-Ablauf (5) und Unter-Zulauf (6) der Steuereinheit (1, 1a) an der Außenseite des Steuereinheits-Gehäuses (3) angeschlossen ist.

13. Wasserenthärtungssystem nach Anspruch 12 mit einer Steuereinheit (1, 1 a) nach Anspruch 10 oder 11, **dadurch gekennzeichnet,**
**dass** das Wasserenthärtungssystem ein Vorratsgefäß (23) für Regeneriermittellösung (23a) sowie Mittel zur automatischen Durchführung einer Regeneration der Enthärtungsvorrichtung, insbesondere umfassend ein mit einem Stellmotor (25) ansteuerbares Regenerationsventil (24), aufweist,
und **dass** der Steueranschluss (22) mit den Mitteln zur automatischen Durchführung einer Regeneration verbunden ist.

14. Verwendung eines Wasserenthärtungssystems nach einem der Ansprüche 12 oder 13,
wobei die Enthärtungsvorrichtung (2) eine eigene
Verschneideeinrichtung aufweist,

und wobei die eigene Verschneideeinrichtung der Enthärtungsvorrichtung (2) geschlossen ist, so dass die Enthärtungsvorrichtung (2) nur vollenthärtetes Wasser bereitstellt.

**Claims**

1. Control unit (1, 1a) for a softening device (2), wherein the control unit (1, 1a) comprises

   - a primary inlet (4) for untreated water,
   - a primary outlet (7) for blended water,
   - a sensor for determining the water hardness of the untreated water $WH_{raw}$ or the blended water $WH_{blend}$,
   - a secondary outlet (15) which is supplied with untreated water from the primary inlet (4),
   - a secondary inlet (6) which is supplied to the primary outlet (7),
   - a bypass line (9) which is guided parallel to the secondary outlet and the secondary inlet (6),
   - a blending means which can be automatically adjusted for mixing a blended water flow $V_{blend}(t)$ from a first partial flow $V(t)_{part1soft}$ of the secondary inlet (6) and a second partial flow $V(t)p_{art2raw}$ of the bypass line (9),
   - an electronic control means (11, 11a), wherein the control means (11, 11a) is designed to readjust the adjustment position of the blending means by means of the determined water hardness $WH_{raw}$ or $WH_{blend}$ in such a fashion that the water hardness in the blended water flow $V_{blend}(t)$ is adjusted to a predetermined desired value,
   **characterized in that**
   the control unit (1, 1a) is designed in the form of an external control unit (1, 1a) for the softening device (2), wherein the control unit (1, 1a) has a control unit housing (3), the outer side of which is provided with the primary inlet (4), the primary outlet (7), the secondary outlet (5) and the secondary inlet (6), and wherein the control unit housing (3) contains the sensor, the bypass line (9), the blending means and the electronic control means (11, 11a).

2. Control unit (1, 1a) according to claim 1, **characterized in that** the sensor is designed as a conductivity sensor (16).

3. Control unit (1, 1a) according to claim 1 or 2, **characterized in that** the sensor is arranged in the untreated water area of the control unit (1, 1a).

4. Control unit (1, 1a) according to any one of the preceding claims, **characterized in that** the control unit (1, 1a) furthermore comprises at least two flow meters (12, 13) for direct or indirect determination of the partial flows $V(t)_{partisoft}$ and $V(t)_{part2raw}$,
   that the electronic control means (11, 11a) is designed to also readjust the adjustment position of the blending means on the basis of the determined partial flows $V(t)_{partisoft}$ and $V(t)_{part2raw}$, and that the control unit housing (3) also contains the at least two flow meters (12, 13).

5. Control unit (1, 1a) according to any one of the preceding claims, **characterized in that** a first flow meter (12) is arranged between the primary inlet (4) and the branching point (8) of the bypass line (9) for determining an overall untreated water inflow $V(t)_{rawall}$, and that a second flow meter (13) is arranged in the bypass line (9) for determining the second partial flow $V(t)_{part2raw}$.

6. Control unit (1, 1a) according to claim 5, **characterized in that** the control unit (1, 1a) has a measuring input (20) for a third flow meter (21) by means of which a rinsing water flow $V(t)_{part3rinse}$ can be determined for the electronic control means (11, 11a),
   and that the electronic control means (11, 11a) is designed to determine the first partial flow $V(t)_{part1soft}$ in accordance with the equation $V(t)_{part1soft} = V(t)_{rawall} - V(t)_{part2raw} - V(t)_{part3rinse}$.

7. Control unit (1, 1a) according to any one of the preceding claims, **characterized in that** a measuring means (17) is arranged in the blended water area in addition to the sensor for determining the concentration of the hardness components calcium and magnesium $C_{hardnessblend}$ in the blended water flow $V(t)_{blend}$.

8. Control unit (1, 1a) according to claim 7, **characterized in that** the measuring means (17) is designed as titrator for titrimetric determination of the hardness components, or that the measuring means (17) comprises an ion-selective sensor, in particular, an ion-selective electrode.

**9.** Control unit (1, 1a) according to any one of the preceding claims, **characterized in that** an automatically actuatable stop valve (18) is disposed directly downstream of the primary inlet (4), and that the electronic control means (11, 11a) is designed to automatically close the stop valve (18) in case of a leakage.

**10.** Control unit (1, 1a) according to any one of the preceding claims, **characterized in that** the control unit (1, 1a) has a control terminal (22) for triggering regeneration of the softening device (2), and that the electronic control means (11, 11a) is designed to determine, in dependence on the soft water withdrawals performed since the last triggered regeneration and on one or more associated defined untreated water hardnesses, a residual capacity of the softening device (2), and upon depletion thereof, to automatically issue a control pulse to the control terminal (22) for triggering regeneration.

**11.** Control unit (1, 1a) according to claim 10, **characterized in that** the sensor is designed as a conductivity sensor (16) for measuring the conductivity of the untreated water $L_{raw}$, and that the electronic control means (11, 11a) is designed to derive an overall hardness I of the untreated water, which is used to control regeneration triggering, from the measured conductivity $L_{raw}$ by means of a first calibration characteristic (F1), and to derive an overall hardness II of the untreated water, which is used to control the blending means, from the measured conductivity $L_{raw}$ by means of a second calibration characteristic (F2).

**12.** Water softening system comprising a softening device (2) with a softener housing (2a) and an external control unit (1, 1a) according to any one of the preceding claims, wherein the control unit (1, 1a) is disposed outside of the softener housing (2a) and wherein the softener device (2) is connected at the secondary outlet (5) and the secondary inlet (6) of the control unit (1, 1a) to the outer side of the control unit housing (3).

**13.** Water softening system according to claim 12 with a control unit (1, 1a) according to claim 10 or 11, **characterized in that** the water softening system has a supply container (23) for regenerant solution (23a) and also means for automatic performance of regeneration of the softening device, in particular, comprising a regeneration valve (24) that can be driven by a servomotor (25), and that the control terminal (22) is connected to the means for automatic performance of regeneration.

**14.** The use of a water softening system according to any one of the claims 12 or 13, wherein the softening device (2) has its own blending means, and wherein the separate blending means of the softening device (2) is closed such that the softening device (2) only provides completely softened water.

## Revendications

**1.** Unité de commande (1, 1a) pour un dispositif d'adoucissement (2), laquelle unité de commande (1, 1a) comprend

    - une arrivée principale (4) pour l'eau brute,
    - une évacuation principale (7) pour l'eau mitigée,
    - un capteur pour déterminer la dureté de l'eau brute $WH_{roh}$ ou de l'eau mitigée $WH_{verschnitt}$,
    - une évacuation secondaire (5) qui est alimentée en eau brute à partir de l'arrivée principale (4),
    - une arrivée secondaire (6) qui est menée à l'évacuation principale (7),
    - une conduite dé dérivation (9) qui est menée parallèlement à l'évacuation secondaire (5) et à l'arrivée secondaire (6),
    - un dispositif de mitigeage à réglage automatique pour mélanger un courant d'eau mitigée $V_{verschnitt}(t)$ à partir d'un premier courant partiel $V(t)_{teil1weich}$ de l'arrivée secondaire (6) et d'un deuxième courant partiel $V(t)_{teil2roh}$ de la conduite de dérivation (9),
    - un dispositif de commande électronique (11, 11a), lequel dispositif de commande (11, 11a) est conçu pour rajuster, au moyen de la dureté de l'eau $WH_{roh}$ ou $WH_{verschnitt}$ déterminée, la position de réglage du dispositif de mitigeage de façon que la dureté de l'eau dans le courant d'eau mitigée $V_{verschnitt}(t)$ soit réglée à une valeur de consigne prédéfinie,
    **caractérisée en ce**
    **que** l'unité de commande (1, 1a) est conçue comme une unité de commande externe (1, 1a) pour le dispositif d'adoucissement (2),
    l'unité de commande (1, 1a) présentant un boîtier d'unité de commande (3) sur le côté extérieur duquel sont formées l'arrivée principale (4), l'évacuation principale (7), l'évacuation secondaire (5) et l'arrivée secondaire (6), et le boîtier d'unité de commande (3) contenant le capteur, la conduite de dérivation (9), le dispositif de mitigeage et le dispositif de commande électronique (11, 11a).

2. Unité de commande (1, 1a) selon la revendication 1, **caractérisée en ce que** le capteur est conçu comme un capteur de conductivité (16).

3. Unité de commande (1, 1a) selon la revendication 1 ou 2, **caractérisée en ce que** le capteur est disposé dans la zone de l'eau brute de l'unité de commande (1, 1a).

4. Unité de commande (1, 1a) selon l'une des revendications précédentes, **caractérisée en ce que** l'unité de commande (1, 1a) présente en outre au moins deux débitmètres (12, 13) pour la détermination directe ou indirecte des courants partiels $V(t)_{teil1weich}$ et $V(t)_{teil2roh}$,
**que** le dispositif de commande électronique (11, 11a) est conçu pour rajuster la position de réglage du dispositif de mitigeage aussi à l'aide des courants partiels $V(t)_{teil1weich}$ et $V(t)_{teil2roh}$ déterminés,
et **que** le boîtier d'unité de commande (3) contient aussi lesdits au moins deux débitmètres (12, 13).

5. Unité de commande (1, 1a) selon l'une des revendications précédentes, **caractérisée en ce qu'**un premier débitmètre (12) pour déterminer un afflux total d'eau brute $V(t)_{rohges}$ est disposé entre l'arrivée principale (4) et le point de bifurcation (8) de la conduite de dérivation (9),
et qu'un deuxième débitmètre (13) pour déterminer le deuxième courant partiel $V(t)_{teil2roh}$ est disposé dans la conduite de dérivation (9).

6. Unité de commande (1, 1a) selon la revendication 5, **caractérisée en ce que** l'unité de commande (1, 1a) présente une entrée de mesure (20) pour un troisième débitmètre (21), au moyen duquel un courant d'eau de rinçage $V(t)_{teil3spül}$ pour le dispositif de commande électronique (11, 11a) peut être déterminé,
et que le dispositif de commande électronique (11, 11a) est conçu pour déterminer le premier courant partiel $V(t)_{teil1weich}$ selon l'équation

$$V(t)_{teil1weich} = V(t)_{rohges} - V(t)_{teil2roh} - V(t)_{teil3spül}.$$

7. Unité de commande (1, 1a) selon l'une des revendications précédentes, **caractérisée en ce qu'**en plus du capteur, un dispositif de mesure (17) est disposé dans la zone de l'eau mitigée pour déterminer la concentration des agents de dureté calcium et magnésium $C_{härteverschnitt}$ dans le courant d'eau mitigée $V(t)_{verschnitt}$.

8. Unité de commande (1, 1a) selon la revendication 7, **caractérisée en ce que** le dispositif de mesure (17) est conçu comme titrateur pour une détermination titrimétrique des agents de dureté, ou que le dispositif de mesure (17) comprend un capteur sélectifs aux ions, en particulier une électrode sensible aux ions.

9. Unité de commande (1, 1a) selon l'une des revendications précédentes, **caractérisée en ce qu'**un robinet d'arrêt (18) à commande automatique est disposé directement derrière l'arrivée principale (4),
et que le dispositif de commande électronique (11, 11a) est conçu pour fermer automatiquement le robinet d'arrêt (18) en cas de présence d'une fuite.

10. Unité de commande (1, 1a) selon l'une des revendications précédentes, **caractérisée en ce que** l'unité de commande (1, 1a) présente un raccord de commande (22) pour déclencher une régénération du dispositif d'adoucissement (2),
et **que** le dispositif de commande électronique (11, 11a) est conçu pour déterminer une capacité restante du dispositif d'adoucissement (2) en fonction des prélèvements d'eau adoucie effectués depuis une dernière régénération déclenchée et d'une ou plusieurs duretés d'eau brute déterminées associées et, si elle est épuisée, émettre automatiquement une impulsion de commande sur le raccord de commande (22) pour déclencher une régénération.

11. Unité de commande (1, 1a) selon la revendication 10, **caractérisée en ce que** le capteur est conçu comme capteur de conductivité (16) pour mesurer la conductivité de l'eau brute $L_{roh}$, et que le dispositif de commande électronique (11, 11a) est conçu pour déduire de la conductivité $L_{roh}$ mesurée, au moyen d'une première caractéristique de calibrage (F1), une dureté totale I de l'eau brute qui est utilisée pour commander le déclenchement de la régénération et pour déduire de la conductivité $L_{roh}$ mesurée, au moyen d'une deuxième caractéristique de calibrage (F2), une dureté totale II de l'eau brute qui est utilisée pour commander le dispositif de mitigeage.

**12.** Système d'adoucissement d'eau, comprenant un dispositif d'adoucissement (2) avec un boîtier d'adoucisseur (2a) et une unité de commande externe (1, 1a) selon l'une des revendications précédentes, dans lequel l'unité de commande (1, 1a) est disposée à l'extérieur du boîtier d'adoucisseur (2a), et dans lequel le dispositif d'adoucissement (2) est raccordé à l'évacuation secondaire (5) et à l'arrivée secondaire (6) de l'unité de commande (1, 1a) sur le côté extérieur du boîtier d'unité de commande (3).

**13.** Système d'adoucissement d'eau selon la revendication 12 avec une unité de commande (1, 1a) selon la revendication 10 ou 11, **caractérisé en ce que** le système d'adoucissement d'eau présente un récipient de stockage (23) pour une solution régénérante (23a) ainsi que des moyens permettant l'exécution automatique d'une régénération du dispositif d'adoucissement, comprenant en particulier une vanne de régénération (24) pilotable par un servomoteur (25), et que le raccord de commande (22) est relié aux moyens permettant l'exécution automatique d'une régénération.

**14.** Utilisation d'un système d'adoucissement d'eau selon l'une des revendications 12 ou 13, le dispositif d'adoucissement (2) présentant un dispositif de mitigeage propre, et le dispositif de mitigeage propre du dispositif d'adoucissement (2) étant fermé, de sorte que le dispositif d'adoucissement (2) ne fournit que de l'eau entièrement adoucie.

Fig. 1

Fig. 2

**IN DER BESCHREIBUNG AUFGEFÜHRTE DOKUMENTE**

**In der Beschreibung aufgeführte Patentdokumente**

- EP 0900765 B1
- US 20070215531 A1
- JP 2003019480 A
- US 20070144953 A1
- WO 2009071066 A2